# EUROPÄISCHE PATENTSCHRIFT

(11) **EP 2 266 739 B1**
(45) Veröffentlichungstag und Bekanntmachung des Hinweises auf die Patenterteilung: **11.06.2014**
(21) Anmeldenummer: 10006585.3
(22) Anmeldetag: 24.06.2010
(51) Int. Cl.: B23B 51/06, B23C 5/10, B23C 5/28

(54) **Zerspanungswerkzeug, insbesondere Fräs- oder Bohrwerkzeug**
Cutting tool, in particular milling or drilling tool
Outil de coupe, en particulier outil de fraisage ou de perçage

(30) Priorität: 26.06.2009 DE 102009030587
(43) Veröffentlichungstag der Anmeldung: 29.12.2010
(73) Patentinhaber: Jakob Lach GmbH & Co. KG, 63452 Hanau (DE)
(72) Erfinder: Maurer, Eugen, 61239 Ober-Mörlen (DE)
(74) Vertreter: Stoffregen, Hans-Herbert

(56) Entgegenhaltungen:
- WO-A1-2008/044115
- DE-A1- 3 740 814
- DE-A1- 10 338 754
- DE-A1-102006 043 616
- US-A- 5 272 940
- US-A1- 2001 007 215
- US-A1- 2008 080 938
- "Classification and application of hard cutting materials for metal removal with defined cutting edges -- Designation of the main groups and groups of application", ISO 513:2012,, 5 November 2012 (2012-11-05), pages 1-3, XP008165845,

## Beschreibung

Die Erfindung betrifft ein Zerspanungswerkzeug, insbesondere Fräs- oder Bohrwerkzeug, mit wenigstens einem an einem Werkzeugkörper befestigten Schneideinsatz aus polykristalinem Diamant (PKD) oder kubischen Bornitrid (CBN).

Derartige Zerspanungswerkzeuge sind in der EP 1 023 961 B1 beschrieben und werden hauptsächlich eingesetzt zur Bearbeitung von Werkstücken aus Metall und Metalllegierungen, Keramik, Holz, kunstharz- oder zementgebundenen Spanplatten sowie Kunststoffen ohne und mit Glasfaser- oder Karbonfaserarmierung. Unter geeigneten Einsatzbedingungen kann mit sehr hohen Schnittgeschwindigkeiten, z. B. bis zu 7000 m/min gearbeitet werden, wobei die Standzeiten ein Vielfaches der Standzeiten von Hartrnetallwerkzeugen betragen. Einer noch breiteren Anwendung stehen allerdings die hohen Kosten der Bearbeitung von PKD- und CBN-Werkzeugen entgegen, bei denen es sich um die z. Z. härtesten Schneidmaterialien handelt. Kritisch ist insbesondere bei PKD die Festigkeit und Beständigkeit bei erhöhten Temperaturen.

Weiterhin sind aus der DE 37 40 814 A1 Schneidkörper aus anderen Schneidstoffen, nämlich aus Hartmetall oder Schneidkeramik, bekannt, in die Kühlmittelkanäle eingearbeitet sind, die für eine gleichmäßige Benutzung der Spanfläche sorgen sollen. Die US 2001/0007215 A1 beschreibt Schneidwerkzeuge ohne Materialangabe mit Kühlmittelkanälen für eine Ölnebelschmierung, die einen halbtrockenen Schneidvorgang bewirkt.

Der Erfindung liegt die Aufgabe zugrunde, ein Zerspanungswerkzeug der eingangs genannten Art zu schaffen, bei dem die Kühlung des wenigstens einen Schneideinsatzes verbessert ist, so dass er ggf. noch bei Arbeitsbedingungen eingesetzt werden kann, unter denen herkömmliche PKD- oder CBN-Werkzeuge zu heiß würden, und diese Aufgabe wird erfindungsgemäß dadurch gelöst, dass durch den Werkzeugkörper geführte Kühlmittelkanäle Anschluss haben an wenigstens einen in den PKD- oder CBN-Schneideinsatz eingearbeiteten Kühlmittelkanalabschnitt mit einer Mündungsöffnung in einer Spanfläche des Schneideinsatzes, wobei die Mündungsöffnung (36) so gerichtet ist, dass das daraus ausströmende Kühlmittel dazu beiträgt, die erzeugten Späne von der Spanfläche (24) abzuheben und/oder gezielt fortzuspülen.

Die verbesserte Kühlung der Schneideinsätze wird also erfindungsgemäß durch zusätzliche Kühlung von innen erzielt. Da die Schneideinsätze normalerweise verhältnismäßig klein sind, kommt das Kühlmittel bereits in jedem Schneideinsatz nahe an die Schneidkante heran und kann von dort in das Material eindringende Wärme abführen. Außerdem wird das in der Spanfläche in unmittelbarer Nähe der Schneidkante, aus dem Kühlmittelkanal austretende Fluid auch auf der Außenseite der Schneideinsätze auf kürzestem Wege zur Schneidkante geleitet und kann somit optimal kühlen und die Spanabfuhr fördern.

Der Vorteil der verbesserten Kühlung übersteigt den Nachteil zusätzlicher Kosten für die Einarbeitung eines Kühlmittelkanalabschnitts in die Schneideinsätze, insbesondere dann, wenn er in bevorzugter Ausgestaltung der Erfindung jeweils nur teilweise in dem Schneideinsatz und auf dem restlichen Teil des Umfangs in dem Werkzeugkörper ausgebildet wird. Man muss in dem extrem harten Schneidmaterial dann nicht ein Loch erzeugen, sondern kann z. B. mittels einer Drahtelektrode oder eines Lasers eine am Umfang offene Nut einarbeiten. Die erfindungsgemäß verbesserte Kühlung kann außer den Mantelschneiden auch Stirnschneiden zugute kommen.

Die Anordnung der Kühlmittelkanalabschnitte und ihrer Mündungsöffnungen in den Schneideinsätzen ist darüber hinaus Platz sparend. Man kann bei einem rotierend antreibbaren Werkzeugkörper mehr Schneideinsätze am Umfang unterbringen, und dadurch bei gleicher Abtragsleistung die einzelnen Schneidkanten geringer belasten und ihre Erwärmung weiter reduzieren. Bei Werkzeugen für langspanende Nichteisenmetalle und zunehmend kleinerem Umfangsabstand zwischen den Schneideinsätzen gewinnt allerdings der Querschnitt der Spanräume größere Bedeutung für eine einwandfreie Spanabfuhr. Als optimal hat sich in dieser Beziehung eine Werkzeugkonstruktion erwiesen, bei der die plattenförmigen Schneideinsätze in passenden Schlitzen im Werkzeugkörper sitzen, die im Querschnitt kreisabschnittförmige, Spanräume bildende Aussparungen in der Umfangsfläche des Werkzeugkörpers durchdringen.

Schließlich trägt durch geeignete Ausrichtung der Mündungsöffnungen das daraus ausströmende, vorzugsweise unter einem Druck von mehr als 40 bar stehende Kühlmittel dazu bei, die erzeugten Späne von der Spanfläche abzuheben und/oder gezielt fortzuspülen.

Nachstehend werden Ausführungsbeispiele der Erfindung anhand der beiliegenden Zeichnung näher erläutert. Es zeigen:
- Fig. 1: eine perspektivische Ansicht des vorde- ren Endes eines Fräswerkzeugs mit vier Schneideinsätzen;
- Fig. 2: eine Seitenansicht des Fräswerkzeugs nach Fig. 1;
- Fig. 3: eine Stirnansicht des Werkzeugs nach Fig. 1 und 2;
- Fig. 4: einen Querschnitt nach Schnittlinie A-A in Fig. 2;
- Fig. 5: einen Längsschnitt nach Schnittlinie B-B in Fig. 2;
- Fig. 6: eine perspektivische Ansicht eines Fräswerkzeugs mit neun Schneideinsät- zen;
- Fig. 7: eine perspektivische Ansicht des vorde- ren Endes des Fräswerkzeugs nach Fig. 6 in größerem Maßstab;
- Fig. 8: eine Seitenansicht, zum Teil im Schnitt, des Fräswerkzeugs nach Fig. 6;
- Fig. 9: eine Stirnansicht des Fräswerkzeugs nach Fig. 6 bis 8 und
- Fig. 10: einen Längsschnitt durch das vordere Ende des Fräswerkzeugs nach Fig. 6 bis 9.

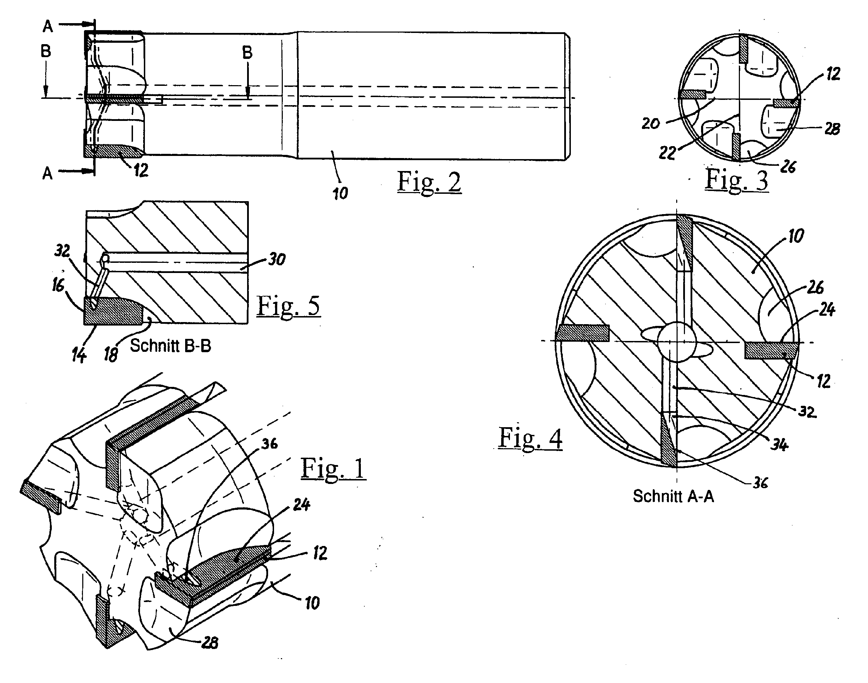

Das in Fig. 1 bis 5 dargestellte Fräswerkzeug besteht aus einem schaftförmigen Werkzeugkörper 10, an dessen vorderen Ende mit gleichmäßiger Verteilung am Umfang vier Schneideinsätze 12 befestigt sind. Sie haben im wesentlichen die Form rechteckiger Platten mit jeweils einer radial aus dem Werkzeugkörper 10 herausragenden Schneidkante 14 - der sog. Mantelschneide - und einer axial nach vorne über den Werkzeugkörper 10 vorstehenden Schneidkante 16 - der sog. Stirnschneide. Die Schneideinsätze 12 sind jeweils in passende, in den Werkzeugkörper 10 eingefräste Längsschlitze 18 eingelötet, die derart neben und parallel zu zwei sich unter einem rechten Winkel kreuzenden Radialebenen 20, 22 angeordnet sind, dass die Schneidkanten 14, 16 in den Radialebenen 20, 22 liegen können. Im Ausführungsbeispiel liegen auch die Spanflächen 24 von jeweils zwei diametral gegenüber angeordneten Schneideinsätzen 12 in einer der beiden Radialebenen 20 bzw. 22.

In Drehrichtung des Fräswerkzeugs befindet sich vor jeder Spanfläche 24 ein Spanraum 26, der durch eine Ausfräsung in der Umfangsfläche des Werkzeugskörpers erzeugt ist. Die im Querschnitt kreisbogenförmigen, am hinteren Ende der Schneideinsätze 12 gerundet zur Umfangsfläche hin auslaufenden Ausfräsungen der Spanräume 26 sind jeweils in einem Randbereich durchdrungen von den tiefer in den Werkzeugkörper 10 eindringenden Schlitzen 18. Außerdem sind gemäß Fig. 1 und 3 jeweils hinter den Schneideinsätzen 12 in die Stirnfläche des Werkzeugkörpers 10 verhältnismäßig flache Einsenkungen 28 eingearbeitet.

Die Besonderheit des dargestellten Fräswerkzeugs besteht darin, dass ein zentraler Kühlmittelkanal 30 über vier Zweigkanäle 32 Anschluss hat an vier Kühlmittelkanalabschnitte 34, die jeweils durch einen der Schneideinsätze 12 zu einer Mündungsöffnung 36 in dessen Spanfläche führen. Das unter einem hohen Druck von mehr als 40 bar zugeführte Kühlmittel kühlt somit die Schneideinsätze 12 von innen und außen, hebt den erzeugten Span von der Spanfläche ab und spült ihn aus dem Spanraum.

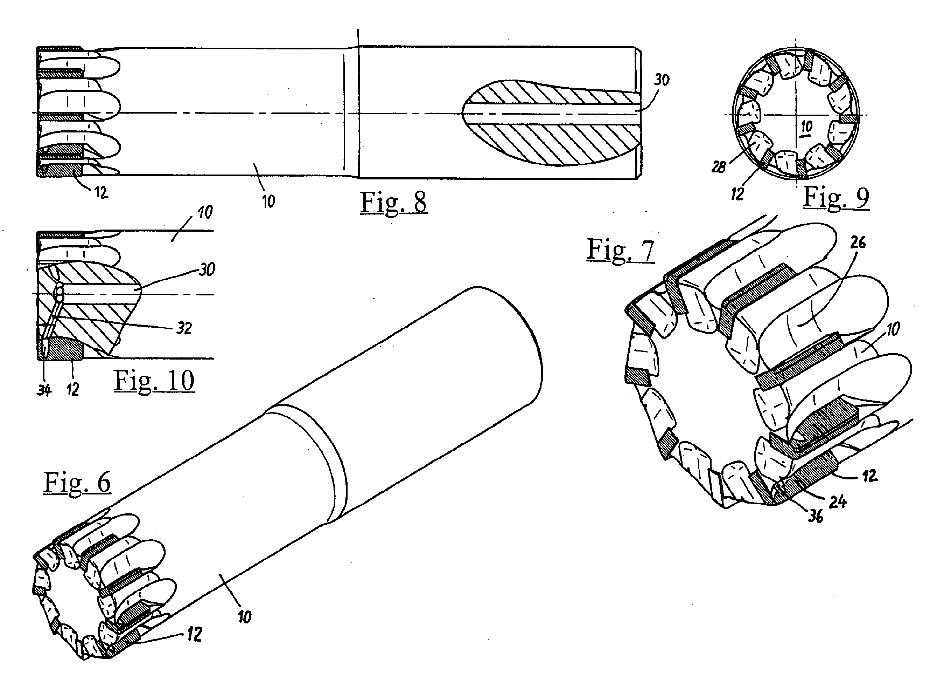

Das in Fig. 6 bis 10 dargestellte Fräswerkzeug zur Bearbeitung von langspanenden Nichteisenmetallen unterscheidet sich von dem nach Fig. 1 bis 5 im Prinzip nur dadurch, dass es mit neun statt vier Schneideinsätzen bestückt ist. Das ist eine verhältnismäßig große Zahl, wenn man berücksichtigt, dass der Umkreis der Mantelschneiden nur einen Durchmesser von 25 mm hat. Ermöglicht wird sie durch die im Querschnitt kreisabschnittförmigen Spanräume 26, die Quotienten aus Werkzeugdurchmesser und Zahl der Schneideinsätze im Bereich von 2,5 bis 3,2 zulassen.

Abweichend von den in der Zeichnung dargestellten Fräswerkzeugen kann der erfinderische Gedanke auch bei anderen Zerspanungswerkzeugen mit Schneideinsätzen aus PKD oder CBN Anwendung finden, z. B. Fräswerkzeugen mit einer anderen Schneidengeometrie, anderem Spanwinkel und/oder anderer Gestaltung der Spanfläche, z. B. mit einem durch Vertiefungen und/oder Erhebungen gebildeten Spanbrecher oder Spanleitstufen-Relief. Darüber hinaus eignet sich die Erfindung auch für Bohr- und Drehwerkzeug mit Schneideinsätzen aus PKD oder CBN. Dabei ist es im Hinblick auf die Herstellungskosten besonders vorteilhaft, wenn die Kühlmittelkanalabschnitte 34 nicht in das extrem harte PKD- oder CBN-Material gebohrt, sondern mit Bezug auf die Mittellängsachse eines Kühlmittelkanalabschnitts 34, z. B. mittels einer nach Art einer Bandsäge bewegten Drahtelektrode, in radialer Richtung in das Material des Schneideinsatzes eingearbeitet wird, so dass ein in Längsrichtung offener Kanal entsteht, der am Umfang durch einen entsprechenden, im Werkzeugkörper 10 erzeugten Kanalabschnitt, über den Umfang des Kühlmittelkanalabschnitts 34 gesehen, ergänzt wird. In Fig. 4 ist ein derartiger Kühlmittelkanalabschnitt 34 dargestellt, der am Umfang teilweise durch das Material des Schneideinsatzes 12 und teilweise durch das Material des Werkzeugkörpers 10 begrenzt ist.

## Patentansprüche

1. Zerspanungswerkzeug, insbesondere Fräs- oder Bohrwerkzeug, mit wenigstens einem an einem Werkzeugkörper (10) befestigten Schneideinsatz (12) aus polykristalinem Diamant (PKD) oder kubischem Bornitrid (CBN), **dadurch gekennzeichnet, dass** ein durch den Werkzeugkörper (10) geführter Kühlmittelkanal (30, 32) Anschluss hat an wenigstens einen in den PKD- oder CBN-Schneideinsatz (12) eingearbeiteten Kühlmittelkanalabschnitt (34) mit einer Mündungsöffnung (36) in einer Spanfläche (24) des Schneideinsatzes (12), wobei die Mündungsöffnung (36) so gerichtet ist, dass das daraus ausströmende Kühlmittel dazu beiträgt, die erzeugten Späne von der Spanfläche (24) abzuheben und/oder gezielt fortzuspülen.

2. Zerspanungswerkzeug nach Anspruch 1, **dadurch gekennzeichnet, dass** der in den PKD- oder CBN-Schneideinsatz (12) eingearbeitete Kühlmittelkanalabschnitt (34) auf wenigstens einem Teil seiner Länge teilweise durch das Material des Schneideinsatzes (12) und teilweise durch das Material des Werkzeugkörpers (10) begrenzt ist.

3. Zerspanungswerkzeug nach Anspruch 1 oder 2 mit einem rotierend antreibbaren Werkzeugkörper (10) und mehreren Schneideinsätzen (12), **dadurch gekennzeichnet, dass** wenigstens ein Teil der Schneideinsätze (12) eine Mantel- und eine Stirnschneidkante (14, 16) aufweist.

4. Zerspanungswerkzeug nach Anspruch 3, **dadurch gekennzeichnet, dass** die plattenförmigen Schneideinsätze (12) in passenden Schlitzen (18) im Werkzeugkörper (10) sitzen, die im Querschnitt kreisabschnittförmige, Spanräume (26) bildende Aussparungen in der Umfangsfläche des Werkzeugkörpers (10) durchdringen.

5. Zerspanungswerkzeug nach Anspruch 4, **dadurch gekennzeichnet, dass** die die Spanräume (26) bildenden Aussparungen maximal halbkreisförmige Querschnitte haben.

6. Zerspanungswerkzeug nach Anspruch 4 oder 5 für langspanende Nichteisenmetalle, **dadurch gekennzeichnet, dass** das Verhältnis zwischen dem in mm gemessenen Durchmesser des Umkreises der Mantelschneidkanten (14) der Schneideinsätze (12) und der Zahl dieser Schneideinsätze (12) im Bereich von 2,5 bis 3,2 liegt.

## Claims

1. Cutting tool, in particular a milling or drilling tool, having at least one cutting insert (12) of polycrystalline diamond (PCD) or cubic boron nitride (CBN) fastened to a tool body (10), **wherein** a coolant duct (30, 32) passing through the tool body (10) is connected to at least one coolant duct section (34) integrated into the PCD or CBN cutting insert (12) and having a discharge opening (36) in a cutting face (24) of the cutting insert (12), said discharge opening (36) being aligned such that the coolant flowing out of it helps to lift the resulting chips from the cutting face (24) and/or flush them away in a controlled manner.

2. Cutting tool according to claim 1, **wherein** the coolant duct section (34) integrated into the PCD or CBN cutting insert (12) is limited over at least part of its length partly by the material of the cutting insert (12) and partly by the material of the tool body (10).

3. Cutting tool according to claim 1 or 2 with a rotatably drivable tool body (10) and several cutting inserts (12), **wherein** at least a part of each cutting insert (12) has a peripheral cutting edge and a front cutting edge (14, 16).

4. Cutting tool according to claim 3, **wherein** the plate-like cutting inserts (12) are mounted in matching slots (18) inside the tool body (10) which pass through recesses of circle-segment-shaped cross-section and forming chip spaces (26) in the circumferential surface of the tool body (10).

5. Cutting tool according to claim 4, **wherein** the recesses (26) forming the chip spaces have cross-sections which are at most semicircular.

6. Cutting tool according to claim 4 or 5 for long-chipping non-ferrous metals, **wherein** the ratio between the diameter, measured in mm, of the circumference of the peripheral cutting edges (14) of the cutting inserts (12) and the number of such cutting inserts (12) is in the range from 2.5 to 3.2.

## Revendications

1. Outil à enlèvement de copeaux, en particulier outil à fraiser ou à percer, comprenant au moins un insert de coupe (12) en diamant polycristallin (PCD) ou en nitrure de bore cubique (CBN) fixé à un corps d'outil (10), **caractérisé en ce qu'**une canalisation de réfrigérant (30, 32) s'étendant à travers le corps d'outil (10) est raccordée à au moins une section de canalisation de réfrigérant (34) aménagée dans l'insert de coupe en PCD ou CBN (12) et munie d'une embouchure (36) dans une face de coupe (24) de l'insert de coupe (12), sachant que l'embouchure (36) est orientée de manière telle que le réfrigérant qui en sort contribue à détacher et/ou évacuer de manière ciblée de la face de coupe (24) les copeaux formés.

2. Outil à enlèvement de copeaux selon la revendication 1, **caractérisé en ce que** la section de canalisation de réfrigérant (34) aménagée dans l'insert de coupe en PCD ou CBN (12) est délimitée sur au moins une partie de sa longueur partiellement par le matériau de l'insert de coupe (12) et partiellement par le matériau du corps d'outil (10).

3. Outil à enlèvement de copeaux selon la revendication 1 ou 2 comprenant un corps d'outil (10) entraînable en rotation et plusieurs inserts de coupe (12), **caractérisé en ce qu'**au moins une partie des inserts de coupe (12) présente une arête de coupe périphérique et une arête de coupe frontale (14, 16).

4. Outil à enlèvement de copeaux selon la revendication 3, **caractérisé en ce que** les inserts de coupe (12) en forme de plaque sont logés dans le corps d'outil (10) dans des fentes adaptées (18) qui pénètrent dans des évidements en forme de segment de cercle en coupe transversale et formant des logements de copeaux (26) dans la surface circonférentielle du corps d'outil (10).

5. Outil à enlèvement de copeaux selon la revendication 4, **caractérisé en ce que** les évidements formant les logements de copeaux (26) ont des coupes transversales au maximum semi-circulaires.

6. Outil à enlèvement de copeaux selon la revendication 4 ou 5 pour métaux non ferreux à copeaux longs, **caractérisé en ce que** le rapport entre le diamètre exprimé en mm du cercle circonscrit des arêtes de coupe périphériques (14) des inserts de coupe (12) et le nombre desdits inserts de coupe (12) est compris entre 2,5 et 3,2.
